(19) Europäisches Patentamt
European Patent Office
Office européen des brevets

(11) EP 0 627 642 B1

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int Cl.⁶: **G02B 21/20**

(21) Anmeldenummer: **94105417.3**

(22) Anmeldetag: **08.04.1994**

(54) **Binokularer Einblick**

Binocular attachment

Accessoire binoculaire

(84) Benannte Vertragsstaaten:
**CH DE FR GB LI**

(30) Priorität: **27.05.1993 DE 9308044 U**

(43) Veröffentlichungstag der Anmeldung:
**07.12.1994 Patentblatt 1994/49**

(73) Patentinhaber: **J.D. Möller Optische Werke GmbH**
**D-22880 Wedel (DE)**

(72) Erfinder: **Twisselmann, Lorenz, Dr.-Ing.**
**D-25497 Prisdorf (DE)**

(74) Vertreter: **Richter, Werdermann & Gerbaulet**
**Neuer Wall 10**
**20354 Hamburg (DE)**

(56) Entgegenhaltungen:
DE-A- 3 117 858          DE-U- 8 535 274
US-A- 3 964 818          US-A- 4 175 826

- SOVIET INVENTIONS ILLUSTRATED Section PQ, Week 8239, 10. November 1982 Derwent Publications Ltd., London, GB; Class P81, AN M9102 E & SU-A-885 956 (LENINGRAD PREC MECH OPTI) 30. November 1981

# Beschreibung

Die Erfindung betrifft einen binokularen Einblick für Mikroskope oder andere optische Instrumente gemäß dem Oberbegriff von Anspruch 1.

Mikroskope, insbesondere Operationsmikroskope für die Augenchirurgie zur vergrößerten Betrachtung des Auges, aber auch andere optische Instrumente erfüllen die Aufgabe, unter kleinem Sehwinkel erscheinende Gegenstände optisch zu vergrößern, um Einzelheiten besser erkennen zu können. Dies gilt sowohl für Gegenstände, die tatsächlich sehr klein sind, als auch für Gegenstände, die bisherige Entwicklung von Operationsmikroskopen befaßt sich in weiter Entfernung vom Betrachter befinden. Die sich mit der Frage der Bildumkehr (vgl. DE-A-35 39 009) und einer möglichst kompakten Mikroskopbauweise.

In der US-A-4 175 826 wird ein binokularer Einblick für ein Stereomikroskop beschrieben, bei dem zwei Gehäuse vorgesehen sind, die drehgelenkig miteinander verbunden sind, so daß die binokularen Einblickelemente in einem Gehäuse es ermöglichen, ein Objekt stereoskopisch zu betrachten, das mit dem Mikroskop zu untersuchen ist, an dem der Beobachtungsaufsatz befestigt ist. Die Qualität der stereoskopischen Betrachtungsweise soll dabei durch die Schwenkverhältnisse des Winkels zwischen den beiden Gehäusen nicht beeinträchtigt werden. Der Aufbau der bekannten Vorrichtung umfaßt einen binokularen Beobachtungskopf (Einblick) für das Stereomikroskop, wobei der erwähnte Kopf folgende Bauteile umfaßt: ein erstes Gehäuse, das eine Strahleneintrittsseite hat, die für die Befestigung an einem Mikroskopkörper und für die Akkomodation von zwei seitlich angeordneten, stereoskopisch zueinander in Beziehung stehenden Eintrittsstrahlenbündeln ausgelegt ist, wobei die erwähnten Strahlenbündel auf Achsen liegen, die eine Eintrittsebene begrenzen, und ein zweites Gehäuse, das eine Strahleneintrittsseite hat und für die Anbringung binokularer Betrachtungselemente auf parallel angeordneten Achsen ausgelegt ist, die eine Austrittsebene begrenzen, wobei die erwähnten Gehäuse miteinander drehbar auf einer Achse verbunden sind, die parallel zum geometrischen Strahlenschnitt der erwähnten Eintritts- und Austrittsebenen liegt, und der Bereich der relativen Schwenkbewegung der erwähnten Gehäuse weniger als 180° beträgt, einen einzelnen, planflächigen Spiegel, der sich mindestens innerhalb eines der erwähnten Gehäuse im Bereich ihrer drehbaren Verbindung der erwähnten Gehäuse befindet, mechanische neigungsstabilisierende und winkelteilende Verbindungsstücke zu beiden Gehäusen, wobei der erwähnte Spiegel solche effektiven Flächenproportionen hat, um den Einfall beider Eintrittsstrahlenbündel innerhalb des erwähnten ersten Gehäuses aufzunehmen und die erwähnten Strahlenbündel in gleichem Maße innerhalb des zweiten Gehäuses zu reflektieren, ungeachtet des Schwenkverhältnisses des Winkels zwischen den erwähnten Gehäusen im jeweiligen Augenblick, wobei das zweite Gehäuse optische Mittel aufweist, die sowohl die reflektierten Strahlenbündel aufnehmen und dieselben mit gleicher Weglänge und in unterteilter Relation für die binokulare Betrachtung auf den jeweiligen Achsen der Austrittsseite übertragen, sowie binokulare Betrachtungselemente, die an dem zweiten Gehäuse angebracht sind, wobei jedes binokulare Betrachtungselement einen Achsenverstellarm aufweist, der an dem zweiten Gehäuse zur einstellbaren Drehung um eine der parallel in bestimmten Abständen angeordneten Achsen der Austrittsebene angebracht ist, sowie zusammenklappbare Spiegel auf jeder der parallel in bestimmten Abständen angeordneten Achsen der Austrittsebene, wobei die Spiegel einstellbar befestigt sind, um eine parallele Präzisionsausfluchtung der Achsen für die binokularen Betrachtungselemente zu ermöglichen, und ein einzelnes Steuerungsteil, das von dem zweiten Gehäuse getragen wird und mit den Achsenverstellarmen für deren gegenläufige Einstellbetätigung verbunden ist.

Allerdings wird mit den Mitteln der bekannten Vorrichtung die durch die Konvergenz der Okulare entstehende gegenläufige Bilddrehung in den beiden Strahlengängen durch eine spezielle Ausgestaltung der Prismen zur Bildaufrichtung kompensiert, jedoch sind keine Mittel vorgesehen, um eine doppelte Schwenkung der Okulare um einerseits eine horizontale Achse und andererseits um einen Punkt auf der optischen Achse der Objektive zur Bilddrehung zu ermöglichen.

Es ist Aufgabe der vorliegenden Erfindung, den binokularen Einblick für Mikroskope oder andere optische Instrumente der eingangs genannten Art dahin zu verbessern, daß die Handhabbarkeit des Einblicks erleichtert bzw. verbessert wird und eine Einstellmöglichkeit geschaffen wird, die zu einer Abbildung führt, welche dem Bild bei einer Betrachtung ohne Sehhilfe (mit Ausnahme der Vergrößerung) am nächsten kommt.

Diese Aufgabe wird durch die Merkmale im Kennzeichnenden Teil von Anspruch 1 gelöst.

Die Okulare sind an einem schwenkbaren Gehäuseteil befestigt, mit dem auch die Spiegelfläche verbunden ist. Dies erleichtert die Bedienung des Mikroskopes oder des optischen Instrumentes.

Die optischen Achsen der Okulare bilden einen in Blickrichtung der beiden Strahlengänge gesehen konvergenten Winkel. Hiermit wird dem Umstand Rechnung getragen, daß bei einer natürlichen Nahbetrachtung ohne Sehhilfe die in die Augen fallenden Strahlengänge nicht parallel sind, sondern in Blickrichtung konvergent verlaufen. Die Mikroskopbetrachtung mit entsprechend konvergentem Strahlenverlauf vermittelt somit den Eindruck einer natürlichen Betrachtungsweise.

In einem feststehenden Gehäuseteil und mit diesem verbunden sind die beiden Objektive und die Umlenkeinrichtung angeordnet, womit eine kompakte Bauweise ermöglicht wird. Vorzugsweise besteht die Umlenkeinrichtung aus einem Prisma, einer Prismenanordnung oder einem Spiegel.

Die Bildaufrichtung kann insbesondere mit Porroprismen 2.Art durchgeführt werden, die zur Kompensation der Bilddrehung je um die Ein- und Ausgangsachsen des Porrosystems um den halben Winkel der Bilddrehung gedreht sind. Porroprismen sind prinzipiell nach dem Stand der Technik bekannt und bestehen aus mehreren, in Halbwürfelform angeordneten Prismen. Vorzugsweise werden die Reflexionswinkel in den Porroprismen durch geänderte Prismenwinkel angepaßt.

Vorteilhafte Ausgestaltungen der Erfindung gehen aus den Unteransprüchen hervor.

Ausführungsbeispiele der Erfindung sind in der Zeichnung dargestellt. Es zeigen:

Fig. 1   eine schematische, geschnittene Seitenansicht eines konventionellen Mikroskopeinblikkes,

Fig. 2   eine Draufsicht der Anordnung nach Fig. 1,

Fig. 3   dieselbe Anordnung nach Fig. 2 mit erfindungsgemäßen konvergentem Strahlengang,

Fig. 4   ein Porroprismenpaar und

Fig. 5   gekippte Porroprismen zur Korrektur der Bilddrehung.

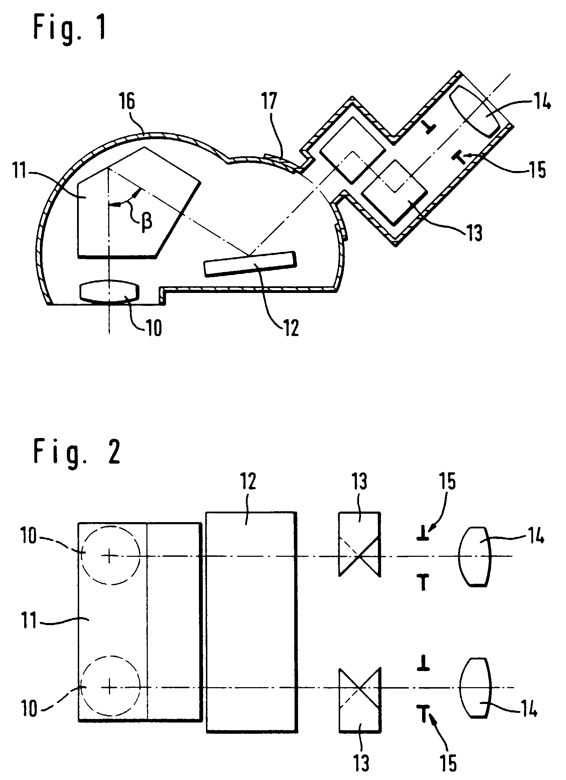

Der in den Fig. 1 und 2 dargestellte bekannte Einblick für ein Operationsmikroskop besteht im wesentlichen aus einem Paar von Objektiven 10, einer ersten Umlenkeinrichtung 11, einem Drehspiegel 12, einem Prismensystem 13 zur Bildaufrichtung und einem Okular 14. Mit 15 ist die Bildblende der beiden Strahlengänge bezeichnet. Die aus Fig. 1 und 2 ersichtliche Anordnung entspricht optisch etwa einem Fernrohr mit Bildaufrichtung. Die beiden Objektive 10 sind in einem festen Gehäuseteil 16 angeordnet und bilden jeweils das Bild in der Bildebene in Höhe der Bildebene 15 vor dem Okular 14 ab. Das Strahlenumlenksystem 11 lenkt die beiden Strahlengänge auf die Oberfläche des Drehspiegels 12, der sich bei Drehung des beweglichen Gehäuseteils 17 mit dem halben Winkel dieser Drehung dreht. Vor der Bildebene ist für jeden Strahlengang ein Prismensystem 13 zur Bildaufrichtung im beweglichen Gehäuseteil 17 vorgesehen, das aus Porroprismen 2.Art besteht.

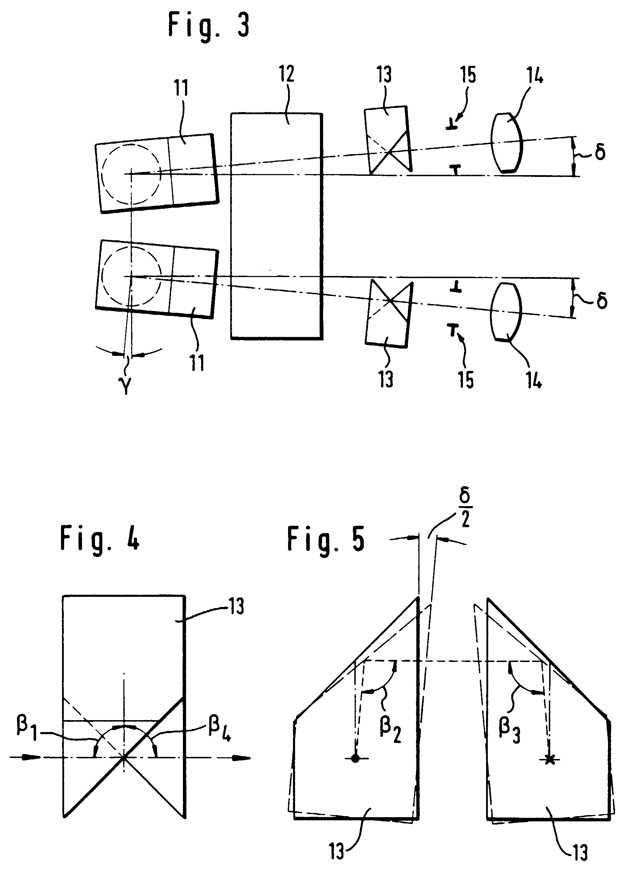

Zur Erzeugung des in Fig. 3 dargestellten erfindungsgemäßen konvergenten Strahlenganges wird das Umlenksystem 11 (jeweils pro Strahlengang) um die optische Achse der Objektive um den Winkel $\gamma$ verschwenkt. Gleichzeitig wird der Abstand der Objektivachsen zur Drehachse des Spiegels 12 korrigiert. Mit Verdrehung der Umlenkeinrichtung 11 um den Winkel $\gamma$ tritt mit dem Umlenkwinkel $\beta$ am Prisma 13 (vgl. Fig.5) eine Bilddrehung $\alpha$ auf, die der Gesetzmäßigkeit $\alpha = \frac{2\gamma}{180}\beta$ folgt.

Zur Korrektur der Bilddrehung $\alpha$ werden die bildaufrichtenden Porroprismen 13 zueinander um die Ein- und Ausgangsachse des Prismensystems soweit gedreht, bis die Bilddrehung wieder aufgehoben ist. Mit der Drehung der Porroprismen 13 muß entweder der Abstand der Ein- und Ausgangsachse des Prismensystems korrigiert werden oder die Reflexionswinkel werden mit den Prismenwinkeln der zweiten und dritten Reflexion (s. $\beta2$, $\beta3$) angepaßt. Zur Kompensation der Bilddrehung ist das Porroprisma um die Ein- und Ausgangsachse des Porrosystems um den halben Winkel $\delta/2$ der Bilddrehung gedreht.

**Patentansprüche**

1.  Binokularer Einblick für Mikroskope oder andere optische Instrumente mit einem in jedem der beiden Strahlengänge in einem ersten Gehäuse (16) angeordneten Objektiv (10), einem Paar von Umlenkeinrichtungen (11), einem Drehspiegel (12) und je einem in einem zweiten Gehäuse (17) zur Augenabstandseinstellung drehbar angebrachten Strahlenumkehrsystem (13) und einem Okular (14) mit einer Sehfeldblende (15), wobei die Okulare mit dem sie tragenden Gehäuse (17) um eine zur Symmetrieebene des Einblicks senkrechte und durch die Spiegelfläche (12) in dem ersten Gehäuse (16) verlaufende Achse schwenkbar angeordnet sind und der Spiegel (12) bei Schwenkung der Okulare (14) um die Hälfte des Winkels mitverschwenkt wird, um den die Okulare schwenken,
    dadurch gekennzeichnet,
    daß die optischen Achsen der Okulare (14) einen in Blickrichtung der beiden Strahlengänge gesehen festgelegten konvergenten Winkel $2\delta$ bilden, wobei die Konvergenz $2\delta$ der Strahlengänge durch Drehung der Umlenkeinrichtungen (11) um die optischen Achsen der Objektive (10) um je einen Winkel $\gamma = \delta/\sin\beta$, mit $\beta$ = Umlenkwinkel an der Umlenkeinrichtung, erzeugt wird mit der Folge, daß eine Bilddrehung um den Winkel $\alpha$ nach der angenäherten Beziehung $\alpha \approx 2 \cdot \gamma \cdot \beta / 180°$ erzeugt wird, daß die Strahlenumkehrsysteme (13) jeweils aus einem Prismensystem zur Bildaufrichtung bestehen, dessen Prismen so gegeneinander um jeweils einen Winkel $\delta/2$ verdreht sind, daß damit die Bilddrehung jeweils zur Hälfte ($\alpha/2$) kompensiert wird.

2.  Binokularer Einblick nach Anspruch 1,
    dadurch gekennzeichnet,
    daß die Umlenkeinrichtung (11) ein Prismenpaar oder ein Spiegelpaar ist.

3.  Binokularer Einblick nach Anspruch 1 und 2,
    dadurch gekennzeichnet,
    daß die Bildaufrichtung mit Porroprismen 2.Art (13) durchgeführt wird.

**4.** Binokularer Einblick nach Anspruch 1, 2 und 3, dadurch gekennzeichnet,
daß die zur Kompensation der Bilddrehung führenden von 90° abweichenden Reflexionswinkel (β2 und β3) in den Porroprismen (13) durch geänderte Prismenwinkel erzeugt werden.


## Claims

**1.** Binocular attachment for microscopes and other optical instruments with an objective (10) disposed in each of the two optical paths in a first housing (16), a pair of deflection means (11), a rotating mirror (12) and one optical path reversing system (13) each rotably mounted in a second housing (17) for the interpupillary adjustment and an eyepiece (14) with a field stop (15), wherein the eyepieces with the housing (17) supporting the same are disposed so as to be swingable about an axis proceeding vertically to the plane of symmetry and through the reflecting mirror surface (12) in the first housing (16) and in which the mirror (12), when the eyepieces (14) are swung horizontally, is swung along by half of the angle through which the eyepieces are swung,
characterized in that
the optical axes of the eyepieces (14), seen in the direction of view of the two optical paths, form a fixed convergent angle 2δ, in which case the convergence 2δ of the optical paths is produced by the rotation of the deflection means (11) about the optical axes of the objectives (10) through, in each case, an angle $\gamma = \delta/\sin \beta$, with β = angle of deflection on the deflection means, with the consequence that an image rotation through the angle α according to the approximate relationship $\alpha \approx 2\cdot\gamma\cdot\beta/180°$ is produced, in that the beam reversing systems (13) are in each case comprised of a prism system for the image erection, whose prisms are rotated relative to each other in such a way in each case through an angle δ/2 so that the image rotation is in each case compensated by half (α/2).

**2.** Binocular attachment according to Claim 1,
characterized in that
the deflection means (11) is a pair of prisms or a pair of mirrors.

**3.** Binocular attachment according to Claims 1 and 2,
characterized in that
the image erection is effected with the aid of Porro prisms of the second type.

**4.** Binocular attachment according to Claims 1,2 and 3,
characterized in that
the angles of deflection (β2 and β3) leading to the compensation of the image rotation diverging from 90° are produced in the Porro prisms (13) by means of altered prism angles.


## Revendications

**1.** Accessoire binoculaire pour microscopes ou autres instruments optiques avec un objectif (10) placé dans chacune des deux marches de rayons dans un premier boîtier (16), une paire de dispositifs de déflexion (11), un miroir rotatif (12) et respectivement un système d'inversion des rayons (13) placé dans un second boîtier (17) rotatif pour le réglage de l'écart des yeux et un oculaire (14) avec un diaphragme de champ (15), les oculaires avec le boîtier (17) qui les porte étant placés pivotants autour d'un axe perpendiculaire au plan de symétrie de l'accessoire et traversant la surface du miroir (12) dans le premier boîtier (16) et le miroir (12) pivotant en même temps lors du pivotement des oculaires (14) de la moitié de l'angle duquel les oculaires pivotent,
caractérisé en ce
que les axes optiques des oculaires (14) forment un angle convergent (26) déterminé, ceci étant vu dans la direction de visée des deux marches de rayons, la convergence 2δ des marches de rayons étant produite par rotation des dispositifs de déflexion (11) autour des axes optiques des objectifs (10) de respectivement un angle $\gamma = \delta/\sin\beta$, avec β = angle de déflexion sur le dispositif de déflexion avec la conséquence qu'une rotation d'image est produite autour de l'angle a selon la relation approchée $a \approx 2.\gamma.\beta / 180°$, que les systèmes d'inversion des rayons (13) sont constitués respectivement par un système de prismes pour le redressement de l'image dont les prismes sont tordus l'un par rapport à l'autre de respectivement un angle δ/2, que la rotation de l'image est ainsi compensée respectivement de moitié (α/2).

**2.** Accessoire binoculaire selon la revendication 1,
caractérisé en ce
que le dispositif de déflexion (11) est une paire de prismes ou une paire de miroirs.

**3.** Accessoire binoculaire selon les revendications 1 et 2,
caractérisé en ce
que le redressement de l'image est réalisé avec des prismes de Porro de second type (13).

**4.** Accessoire binoculaire selon les revendications 1, 2 et 3,
caractérisé en ce
que les angles de réflexion qui dévient de 90° (β2 et β3) qui entraînent la compensation de la rotation de l'image sont produits dans les prismes de Porro (13) par des angles de prismes modifiés.

# Fig. 1

# Fig. 2

EP 0 627 642 B1

# Fig. 3

# Fig. 4

# Fig. 5

7